# EUROPÄISCHE PATENTSCHRIFT

(11) **EP 1 408 297 B1**
(45) Veröffentlichungstag und Bekanntmachung des Hinweises auf die Patenterteilung: **30.03.2005**
(21) Anmeldenummer: 03022431.5
(22) Anmeldetag: 07.10.2003
(51) Int. Cl.: F27B 7/16, C22B 7/00, F27D 1/14

(54) **Metallschmelz-Drehtrommelofen**
Rotary drum furnace for metal smelting
Four rotatif pour la fusion du métal

(30) Priorität: 11.10.2002 DE 20215666 U; 27.02.2003 DE 20303289 U
(43) Veröffentlichungstag der Anmeldung: 14.04.2004
(73) Patentinhaber: SUG Schmelz- und Giessanlagen GmbH & Co. KG, 45701 Herten (DE)
(72) Erfinder: Herrn Dieter Schmidt, 45701 Herten (DE)
(74) Vertreter: Nunnenkamp, Jörg, Dr.

(56) Entgegenhaltungen:
- EP-B- 0 886 118
- DE-A- 2 045 113
- FR-A- 2 632 716
- US-A- 1 920 677
- US-A- 3 563 521

## Beschreibung

Die Erfindung betrifft einen Metallschmelz-Drehtrommelofen, insbesondere zum Umschmelzen von Aluminium, vorzugsweise in einem Schutzbad, mit einer drehbaren Ofentrommel, deren Trommelmantel wenigstens einen am Umfang angeordneten Rührkörper bzw. mehrere um den Umfang verteilt angeordnete Rührkörper aufweist, wobei der jeweilige Rührkörper einen metallischen Kern und eine den metallischen Kern ganz oder teilweise umgebende nichtmetallische Umhüllung aus einem Feuerfestmaterial besitzt.

Bei einem Metallschmelz-Drehtrommelofen der eingangs beschriebenen Ausführungsform entsprechend der US-PS 6 395 221 B1 bleibt offen, wie die Verbindung zwischen dem Feuerfestmaterial und dem metallischen Kern im Einzelnen bewerkstelligt wird. Außerdem können sich Probleme einstellen, die auf die unterschiedliche Wärmeausdehnung von einerseits dem metallischen Kern und andererseits der nicht metallischen Umhüllung zurückzuführen sind. Jedenfalls lassen sich kaum positive Aspekte geltend machen.

Darüber hinaus kennt man einen Metallschmelz-Drehtrommelofen, wie er im Rahmen der EP 0 886 118 B1 beschrieben wird. Außerdem sind Drehtrommelöfen im Stand der Technik bekannt, die mit Rührkörpem ausgerüstet sind, allerdings zum Brennen von Zement, Kalk, Gips oder ähnlichem Gut entsprechend der DE 580 572 C Verwendung finden. Ähnlich gattungsfremd ist ein Drehtrommelofen zur Aufbereitung von Abfällen, wie er im Rahmen der FR 2 415 418 A angesprochen wird.

Die FR 2 632 716 A beschäftigt sich mit einem Drehtrommelofen, welcher beim Kalzinieren Verwendung findet und mit speziellen Rührkörpem mit metallischem Kern ausgerüstet ist.

Die beschriebenen Metallschmelz-Drehtrommelöfen dienen regelmäßig dazu, im Rahmen der sogenannten Schmelzraffination insbesondere Aluminiumschrott (sogenanntes Sekundäraluminium) aufzuarbeiten. Dazu wird der jeweilige Drehtrommelofen über Brenner von innen beheizt, wodurch bei einer gleichförmigen Trommeldrehung eine Durchmischung des Schmelzmaterials erfolgt und sich gleichzeitig die gewünschte Schmelze einstellt. Um unerwünschte Oxidationsprozesse oder andere chemische Reaktionen zu verhindern, wird das Einschmelzen oft in einem Schutzbad vorgenommen.

Neben Drehtrommelöfen zum Umschmelzen von Aluminium, bei denen einzelne Rührkörper aus Eisen, insbesondere Grauguss, radial einwärts vorstehen und wie sie in der EP 0 886 118 B1 beschrieben werden, kennt man darüber hinaus durch die DE 892 382 C einen drehbaren Trommelofen, dessen Ofenraum mit einer Vielzahl wellenförmiger, axial verlaufender Erhebungen ausgerüstet ist.

Die bekannten Metallschmelz-Drehtrommelöfen bzw. dortigen Rührkörper haben sich grundsätzlich bewährt, sind jedoch, was die Herstellungskosten angeht, verbesserungsfähig. Hier will die Erfindung Abhilfe schaffen.

Der Erfindung liegt das technische Problem zugrunde, einen Metallschmelz-Drehtrommelofen der eingangs beschriebenen Gestaltung anzugeben, bei dem sich die Rührkörper gegenüber bisher bekannten Ausführungsformen mit verringertem Aufwand und folglich verminderten Kosten herstellen lassen.

Zur Lösung dieser technischen Problemstellung schlägt die Erfindung bei einem gattungsgemäßen Metallschmelz-Drehtrommelofen vor, dass der metallische Kern als Metallgitterkorb ausgebildet ist, um so gleichsam als Stützkorsett den nötigen Halt für die Umhüllung aus dem Feuerfestmaterial zur Verfügung zu stellen. Zusätzlich empfiehlt die Erfindung, den metallischen Kern mit einer Grundplatte zur Befestigung an dem Trommelmantel des Drehtrommelofens auszurüsten.

Der betreffende Rührkörper zeichnet sich also zunächst einmal durch eine Kombination eines metallischen Kernes mit einer zumeist aus einem feuerfesten Mineralwerkstoff gefertigten nichtmetallischen Umhüllung aus. Letztlich handelt es sich bei dem Rührkörper also um ein Stahlbetonteil, bei welchem der Stahl im Vergleich zum Feuerfestmaterial sowohl gewichts- als auch volumenmäßig nur einen Bestandteil von vielleicht 5 bis 40 Gew.-%, insbesondere 10 bis 20 Gew.-%, darstellt. Wie bei einem Stahlbetonteil erhöht der eingebrachte Stahl die Zugfestigkeit.

Mit Hilfe der Grundplatte mag der metallische Kern und folglich der Rührkörper im Ganzen von innen in den Metallschmelz-Drehtrommelofen eingesetzt und beispielsweise mit dem Trommelmantel verschweißt werden. Auch eine Verschraubung ist denkbar. Genauso gut kann der jeweilige Rührkörper aber auch von außen in entsprechenden Öffnungen des Trommelmantels platziert werden und dort, d. h. außen, mit dem Trommelmantel verbunden, beispielsweise verschraubt oder verschweißt, werden.

Sofern der Rührkörper von innen (oder von außen) in den Trommelmantel eingesetzt wird, lässt sich im Anschluss daran beispielsweise eine Ausmauerung im Innem des Metallschmelz-Drehtrommelofens vorsehen, wie dies im Stand der Technik, beispielsweise nach der EP 0 886 118 B1 oder der DE 892 382 C beschrieben wird. Hierbei handelt es sich jedoch nicht um eine zwingende Maßnahme.

So oder so verfügen in der Regel der metallische Kern und/oder die Grundplatte über Befestigungsmittel zur Verbindung mit dem Trommelmantel. Bei diesen Befestigungsmitteln kann es sich im einfachsten Fall um einen Gewindegang handeln, auf welchen zur Festlegung des Rührkörpers mit Hilfe des metallischen Kerns am Trommelmantel eine Mutter, ggf. unter Zwischenschaltung eines Befestigungsflansches, aufgeschraubt wird.

Der metallische Kern mag aus Eisen, Grauguss oder Stahl hergestellt sein, um die nötige Widerstandsfähigkeit gegenüber der Schmelze im Innern des Drehtrommelofens zu gewährleisten. Denn grundsätzlich kann der metallische Kern natürlich zu einem mehr oder minder großen Teil aus der feuerfesten Umhüllung vorstehen und mit der Schmelze unmittelbar in Berührung kommen. Für diesen Fall hat sich besonders Eisen bzw. Grauguss als Material für den metallischen Kern als vorteilhaft erwiesen.

Das Feuerfestmaterial kann grundsätzlich aus Steinen oder allgemein Raum- oder Formkörpern bestehen, die von dem metallischen Kern umschlossen werden. D. h. der metallische Kern hält die entsprechenden Formkörper zusammen.

Alternativ und nach bevorzugter Ausführungsform ist das Feuerfestmaterial jedoch als aushärtende Gießmasse ausgebildet, die sich mit dem metallischen Kern verbindet. In diesem Fall mag eine den metallischen Kern bzw. Metallgitterkorb umschließende Schalung für die Herstellung des Rührkörpers vorgesehen werden, welche dann mit der Gießmasse vollgegossen wird. Auch eine sog. Feuerfest-Stampfmasse kann an dieser Stelle zur Füllung genutzt werden und fällt unter den Oberbegriff Gießmasse.

Als Feuerfestmaterial empfiehlt die Erfindung grundsätzlich den Einsatz von Keramikwerkstoffen, die entweder in gießfähigem Zustand mit dem metallischen Kern - wie beschrieben - verbunden werden oder in Form von Formkörpern zur Verfügung stehen und von dem metallischen Kern umschlossen werden. In letztgenanntem Fall eignen sich besonders Schamottsteine für den beschriebenen Einsatz.

Bei den Keramikwerkstoffen kommen überwiegend feuerfeste silikatische Erzeugnisse zum Einsatz, die sich je nach Zusammensetzung bis zu Temperaturen über 2000 C° beanspruchen lassen. Solche feuerfesten und hochfesten Erzeugnisse werden zumeist auf der Basis von Nitriden, Siliciden, Oxiden und Carbiden produziert.

Bei der Herstellung der Umhüllung kann die Form mit einem trockenen Grobzuschlagstoff gefüllt werden, wobei an dieser Stelle Schmelzkorund, Sinteraluminiumoxid, Aluminiumoxid-Kugeln, Schmelzbauxit, Schmelz- und Sintermullit, Schmelz- und Sintermagnesia, Schmelz- und Sintermagnesia-Korund-Spinell, Schmelz- und Sinterzirconiumdioxid, feuerfeste Bauxite, feuerfester Andalusit, feuerfeste Schamotte, Siliciumcarbid oder Kombinationen davon zum Einsatz kommen können. Dieser Grobzuschlagstoff wird mit einer Aufschlämmung durchtränkt, die aus Bindemittel, Wasser und feinen Füllstoffen besteht. Bei dem Bindemittel mag es sich um Calciumaluminat-Zement, Portlandzement, hydratisierbares Aluminiumoxid sowie Kombinationen davon handeln. Als feine Füllstoffe empfiehlt die Erfindung gebrannte Aluminiumoxide, tafelförmige Aluminiumoxide, Schmelzkorund, Mullit, Kohlenstoff, Siliciumcarbid, Zirconiumdioxid, Magnesiumoxid, Aluminiumsilicate und Kombinationen davon. Diese Mischung härtet anschließend aus und bildet - nach Entfernen der Form bzw. Schalung - den gewünschten Rührkörper. Dabei bewirkt die Aufschlämmung, dass Hohlräume zwischen den groben Partikeln unter Bildung einer feuerfesten Masse ausgefüllt werden.

Daneben ist es auch möglich, die feuerfeste Umhüllung so herzustellen, indem ein feuerfester Beton entweder durch Vibrationsgießen eines nassen Betons oder durch vibrationsfreies Gießen des Betons hergestellt wird, wobei der Beton über eine selbstfließfähige Konsistenz verfügt.

Schließlich kann die Umhüllung auch aus Stampfmassen aus hochporösen Materialien hergestellt werden. Dabei kommen je nach Anwendungsfall Stampfmassen aus vielfältigen Kombinationen feuerfester Oxide und/oder Karbide zum Einsatz. Auch feste Kohlenstoffträger können Verwendung finden.

In der Regel sind wenigstens zwei, meistens drei oder vier (bzw. noch mehr) um den Umfang des Trommelmantels verteilt angeordnete Rührkörper realisiert. Von diesen Rührkörpern mag wenigstens einer (oder noch mehr bzw. alle) eine Verstellung erfahren. Diese Verstellung kann in radialer Richtung stattfinden, weil die betreffenden Rührkörper zumeist radial angeordnet sind. Die Verstellungen führen unmittelbar dazu, dass die Rührbewegungen innerhalb der Metallschmelze eine Änderung erfahren. Grundsätzlich sind auch Verstellungen des jeweiligen Rührkörpers um die Hochachse des Rührkörpers oder auch seitlich, d. h. in Richtung einer Drehachse des Drehtrommelofens, möglich und werden vom Erfindungsgedanken umfasst. Ebenso Verstellungen in Umfangsrichtung der Drehtrommel bzw. Ofentrommel.

Im Folgenden wird die Erfindung anhand einer lediglich ein Ausführungsbeispiel darstellenden Zeichnung näher erläutert; es zeigen:

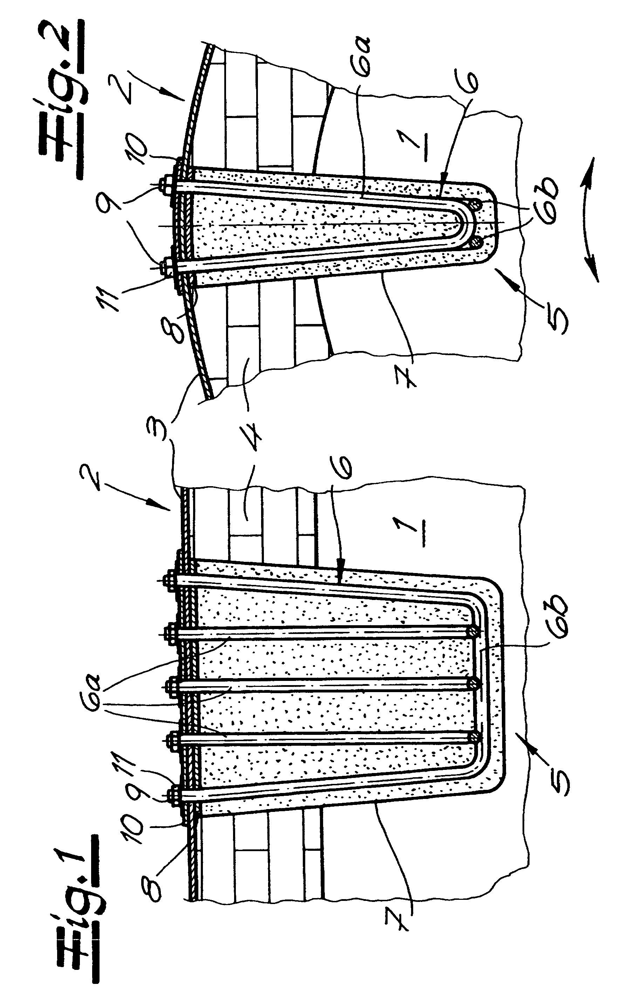

- Fig. 1: einen bereichsweisen Längsschnitt durch einen Metallschmelz-Drehtrommelofen entsprechend der Erfindung mit zugehörigem Rührkörper,
- Fig. 2: einen Querschnitt durch den Gegenstand nach Fig. 1 und
- Fig. 3: den Metallschmelz-Drehtrommelofen in schematischem Querschnitt mit der Möglichkeit zur Verstellung des Rührkörpers.

In den Figuren ist ein Metallschmelz-Drehtrommelofen bzw. Drehtrommelofen dargestellt. Das heißt, dieser Drehtrommelofen wird zum Umschmelzen von Metallen, insbesondere von Aluminium, eingesetzt. Dabei findet der Metallschmelzvorgang in der Regel in einem Schutzbad statt. Das sieht so aus, dass die Metall- bzw. Aluminiumschmelze von einer Salzschicht an ihrer Oberfläche abgedeckt wird, welche die sich bildende Schlacke bindet und die Metallschmelze bzw. Aluminiumschmelze vor Oxidationen oder anderen schädlichen Reaktionen schützt. Der Drehtrommelofen verfügt über eine Ofentrommel 1 sowie einen Trommelmantel 2, welcher eine Stahlblechaußenhülle 3 und eine isolierende hitze- und feuerfeste Auskleidung 4 besitzt.

In dieser hitze- und feuerfesten Auskleidung 4 befinden sich ein oder mehrere Rührkörper 5, die beispielsweise in eine nicht dargestellte Öffnung des Trommelmantels 2 von außen eingesetzt werden können. Im Rahmen des Ausführungsbeispiels werden die Rührkörper 5 jedoch von innen in den Trommelmantel 2 eingesetzt und mit diesem verbunden. Danach wird die hitze- und feuerfeste Auskleidung 4 angebracht.

Der Rührkörper 5 ist erfindungsgemäß durch einen metallischen Kern 6 und eine den metallischen Kern 6 ganz oder teilweise umgebende Umhüllung 7 gekennzeichnet. Die Umhüllung 7 besteht im Rahmen des Ausführungsbeispiels aus einem als aushärtende Gießmasse ausgebildeten Feuerfestmaterial. Nicht dargestellt ist die Möglichkeit, die Umhüllung 7 aus Formkörpern zu realisieren, welche von dem metallischen Kern 6 zusammengehalten werden.

Bei dem metallischen Kern 6 handelt es sich um einen Metallgitterkorb 6 aus Querstreben 6a und Längsstreben 6b, die miteinander verbunden bzw. verschweißt sind und ein Geflecht bilden. Zusätzlich ist noch eine Grundplatte 8 vorgesehen, an welcher der Metallgitterkorb 6 beispielsweise durch Schweißen befestigt wird.

Einzelne Befestigungsstreben 9 des Metallgitterkorbes 6 durchdringen nun die Grundplatte 8 und auch den Trommelmantel 2 bzw. dessen Stahlblechaußenhülle 3, so dass sich der metallische Kern 6 zusammen mit einem Befestigungsflansch 10 am Trommelmantel 2 festlegen lässt. Dazu verfügen die Befestigungsstreben 9 über jeweils einen aufgebrachten Gewindegang, so dass der metallische Kern 6 letztlich mit Hilfe von Muttern 11 am Trommelmantel 2 befestigt werden kann. Das gilt dann natürlich auch für den Rührkörper 5 im Ganzen. Der Gewindegang und die Mutter 11 bilden folglich Befestigungsmittel 11 zur Festlegung des metallischen Kerns 6 und/oder der Grundplatte 8 am Trommelmantel 2.

Weil die Umhüllung 7 aus einer aushärtenden Gießmasse besteht, wird zur Herstellung des Rührkörpers 5 die Grundplatte 8 mit dem Metallgitterkorb 6 von einer nicht gezeigten Schalung umgeben, welche mit der betreffenden Gießmasse gefüllt und nach dem Aushärten entfernt wird.

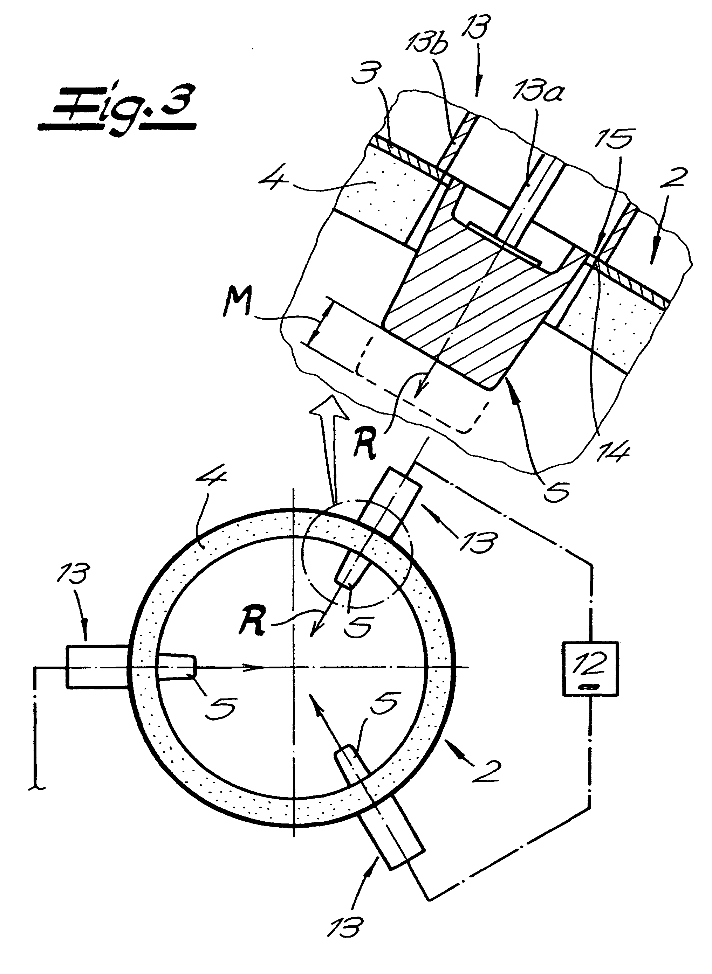

Der metallische Kern bzw. Metallgitterkorb 6 ist im Rahmen des Ausführungsbeispiels aus Eisen bzw. Grauguss oder Stahl gefertigt. Grundsätzlich können natürlich auch andere Metalle zum Einsatz kommen, sofern sie für die nötige Stabilität des Rührkörpers 5 im Ganzen sorgen. Denn dieser Rührkörper 5 ist beim hauptsächlich verfolgten Einsatzzweck des Umschmelzens von Aluminiumschrott erheblichen mechanischen und thermischen Belastungen ausgesetzt, weil die Ofentrommel 1 in Rotationen entsprechend dem Doppelpfeil nach Fig. 2 versetzt wird.

Anhand der Darstellung in Fig. 3 erkennt man, dass der jeweilige Rührkörper 5 nicht nur statisch an der feuerfesten Auskleidung 4 bzw. am Trommelmantel 2 befestigt werden kann, sondern sich grundsätzlich auch verstellen lässt, und zwar im Rahmen des Ausführungsbeispiels um ein vorgegebenes Maß M in radialer Richtung R. Dabei sorgt eine Steueranlage 12 in Verbindung mit jeweiligen Verstelleinrichtungen 13 dafür, dass die einzelnen Rührkörper 5 um das jeweils gleiche Maß M in der radialen Richtung R eine Verstellung erfahren. Grundsätzlich können die Rührkörper 5 aber auch um unterschiedliche Maße M verstellt werden. Ebenso ist es möglich, nur einen Rührkörper 5 oder einzelne ausgewählte Rührkörper 5 zu verstellen. Das ist jedoch nicht dargestellt.

Im Rahmen des Ausführungsbeispiels arbeiten die jeweiligen Verstelleinrichtungen 13 hydraulisch, wobei sich die Verstelleinrichtung 13 jeweils aus einem Kolben 13a und einem Zylinder 13b zusammensetzt. Der Kolben 13a ist an den im Innern wenigstens teilweise hohl ausgebildeten Rührkörper 5 angeschlossen, welcher bei der gezeigten Darstellung die Form eines nach außen hin offenen Zylinders besitzt. Je nach dem in dem Zylinder 13 herrschenden Druck wird der Kolben 13a mehr oder minder ausgefahren, so dass in entsprechendem Sinne der Rührkörper 5 folgt.

Bei dem Ausführungsbeispiel ist die jeweilige Verstelleinrichtung 13 außen am Trommelmantel 2 angeordnet, wenngleich auch eine Festlegung der Verstelleinrichtung 13 innen sowie innen und außen möglich ist und umfasst wird. Der jeweils verstellbare Rührkörper 5 ist in eine Öffnung 14 des Trommelmantels 2 eingesetzt, wobei ein im Ausführungsbeispiel kreisförmiger Schlitz 15 zwischen der Öffnung 14 und dem Rührkörper 5 verbleibt. Dieser Schlitz 15 wird im Betrieb von dem ohnehin eingefüllten Salz bzw. Schutzmaterial zur Darstellung des Schutzbades verschlossen. Selbstverständlich ist es auch möglich, den Schlitz 15 mit Hilfe anderer Füllstoffe zu verschließen, die gegenüber der Metallschmelze beständig sind. In Frage kommen hier die gleichen Feuerfestmaterialen, wie sie mit Bezug zu dem Rührkörper 5 zuvor beschrieben worden sind.

## Patentansprüche

1. Metallschmelz-Drehtrommelofen, insbesondere zum Umschmelzen von Aluminium, mit einer drehbaren Ofentrommel (1), deren Trommelmantel (2) wenigstens einen am Umfang angeordneten Rührkörper (5) aufweist, wobei der Rührkörper (5) einen metallischen Kern (6) und eine den metallischen Kern (6) ganz oder teilweise umgebende nichtmetallische Umhüllung (7) aus einem Feuerfestmaterial besitzt, **dadurch gekennzeichnet, dass** der metallische Kern (6) als Metallgitterkorb (6) ausgebildet ist.

2. Metallschmelz-Drehtrommelofen nach Anspruch 1, **dadurch gekennzeichnet, dass** der metallische Kern (6) eine Grundplatte (8) zur Befestigung an dem Trommelmantel (2) des Drehtrommelofens aufweist.

3. Metallschmelz-Drehtrommelofen nach Anspruch 1 oder 2, **dadurch gekennzeichnet, dass** der metallische Kern (6) und/oder die Grundplatte (8) Befestigungsmittel (11) zur Verbindung mit dem Trommelmantel (2) aufweisen.

4. Metallschmelz-Drehtrommelofen nach einem der Ansprüche 1 bis 3, **dadurch gekennzeichnet, dass** der metallische Kern (6) aus Eisen, Grauguss oder Stahl hergestellt ist.

5. Metallschmelz-Drehtrommelofen nach einem der Ansprüche 1 bis 4, **dadurch gekennzeichnet, dass** als FeuerfestmaterialKeramikwerkstoffe, insbesondere Faserkeramikwerkstoffe auf Basis feuerfester Oxide und/oder Carbide, feuerfester Beton oder dergleichen eingesetzt werden.

6. Metallschmelz-Drehtrommelofen nach einem der Ansprüche 1 bis 5, **dadurch gekennzeichnet, dass** der Rührkörper (5) verstellbar ausgebildet ist.

7. Metallschmelz-Drehtrommelofen nach einem der Ansprüche 1 bis 6, **dadurch gekennzeichnet, dass** der Rührkörper (5) um ein vorgegebenes Maß (M) in radialer Richtung (R) verstellbar ist.

8. Metallschmelz-Drehtrommelofen nach einem der Ansprüche 1 bis 7, **dadurch gekennzeichnet, dass** das Feuerfestmaterial als aushärtende und sich mit dem metallischen Kern (6) verbindende Gießmasse ausgebildet ist.

## Claims

1. A molten bath rotary drum type furnace, particularly for refounding aluminium, with a rotating furnace drum (1), whose basket shell (2) has at least one stirring body (5) located on the periphery, wherein the stirring body (5) has a metallic core (6) and a non-metal cladding (7) made of a fireproof material completely or partially surrounding the metallic core (6),**characterised in that** the metallic core (6) is constructed as a metallic mesh basket (6).

2. The molten bath rotary drum type furnace according to claim 1, **characterised in that** the metallic core (6) has a sole plate (8) for fastening to the basket shell (2) of the rotating drum furnace.

3. The molten bath rotary drum type furnace according to claim 1 or 2, **characterised in that** the metallic core (6) and/or the sole plate (8) is equipped with a securing means (11) for attaching to the basket shell (2).

4. The molten bath rotary drum type furnace according to any of claims 1 to 3, **characterised in that** the metallic core (6) is made from iron, grey cast iron or steel.

5. The molten bath rotary drum type furnace according to any of claims 1 to 4, **characterised in that** ceramic materials, particularly fibre ceramic materials on a basis of fireproof oxides and/or carbides, fireproof cement or similar are used as fireproof materials.

6. The molten bath rotary drum type furnace according to any of claims 1 to 5, **characterised in that** the stirring body (5) is adjustable.

7. The molten bath rotary drum type furnace according to any of claims 1 to 6, **characterised in that** the stirring body (5) is adjustable in a radial direction (R) by a predetermined dimension (M).

8. The molten bath rotary drum type furnace according to any of claims 1 to 7, **characterised in that** the fireproof material has the form of a hardening castable that bonds with the metallic core (6).

## Revendications

1. Four rotatif à tambour de fusion du métal, en particulier pour refondre de l'aluminium, avec un tambour de four (1) rotatif dont l'enveloppe de tambour (2) présente au moins un organe de malaxage (5) disposé sur la périphérie, l'organe de malaxage (5) possédant un noyau métallique (6) et un enrobage non métallique (7) en un matériau réfractaire entourant complètement ou partiellement le noyau métallique (6), **caractérisé en ce que** le noyau métallique (6) est réalisé en tant que corbeille grillagée métallique (6).

2. Four rotatif à tambour de fusion du métal selon la revendication 1, **caractérisé en ce que** le noyau métallique (6) présente une plaque de base (8) pour la fixation du four rotatif à tambour au niveau de l'enveloppe de tambour (2).

3. Four rotatif à tambour de fusion du métal selon l'une quelconque des revendications 1 ou 2, **caractérisé en ce que** le noyau métallique (6) et/ou la plaque de base (8) présentent des moyens de fixation (11) pour la liaison avec l'enveloppe de tambour (2).

4. Four rotatif à tambour de fusion du métal selon l'une quelconque des revendications 1 à 3, **caractérisé en ce que** le noyau métallique (6) est fabriqué en fer, en fonte grise, ou en acier.

5. Four rotatif à tambour de fusion du métal selon l'une quelconque des revendications 1 à 4, **caractérisé en ce que** l'on utilise des matériaux en céramique en guise de matériaux réfractaires, en particulier des matériaux en céramique fibreuse à base d'oxydes et/ou de carbures réfractaires, de béton réfractaire, ou similaire.

6. Four rotatif à tambour de fusion du métal selon l'une quelconque des revendications 1 à 5, **caractérisé en ce que** l'organe de malaxage (5) est conçu de manière à être réglable.

7. Four rotatif à tambour de fusion du métal selon l'une quelconque des revendications 1 à 6, **caractérisé en ce que** l'organe de malaxage (5) est réglable en direction radiale (R) selon une grandeur de parcours (M) prédéfinie.

8. Four rotatif à tambour de fusion du métal selon l'une quelconque des revendications 1 à 7, **caractérisé en ce que** le matériau réfractaire est réalisé en tant que masse de coulée se durcissant et se combinant avec le noyau métallique (6).
